# EUROPEAN PATENT APPLICATION

(11) **EP 4 044 591 A1**
(43) Date of publication of application: **17.08.2022**
(21) Application number: 20894545.1
(22) Date of filing: 12.08.2020
(51) Int. Cl.: H04N 7/18, G06Q 50/08

(54) **WORK ASSIST SERVER, WORK ASSIST METHOD, AND WORK ASSIST SYSTEM**

(30) Priority: 25.11.2019 JP 2019212619
(71) Applicant: KOBELCO CONSTRUCTION MACHINERY CO., LTD., Hiroshima-shi Hiroshima 731-5161 (JP)
(72) Inventor: SAWADA, Yusuke, Hiroshima-shi, Hiroshima 731-5161 (JP); SASAKI, Hitoshi, Hiroshima-shi, Hiroshima 731-5161 (JP); SAIKI, Seiji, Hiroshima-shi, Hiroshima 731-5161 (JP); YAMAZAKI, Yoichiro, Hiroshima-shi, Hiroshima 731-5161 (JP)
(74) Representative: Schön, Christoph
(86) International application number: PCT/JP2020/030682
(87) International publication number: WO 2021/106280

(57) **Abstract**

Provided are a server and system which allow a plurality of people involved in work to share information about an object requiring attention in a work area. A work environment image, which indicates an extension mode of a target object in a real space in a target object image region R that is a part of a captured image obtained through an imaging device (e.g., an imaging device 612) of a first client (e.g., a worker terminal 60) and target object related information, is outputted to an output interface (e.g., a remote output interface 220) of a second client (e.g., a remote operation device 20).

## Description

### Technical Field

The present invention relates to a work assist server to assist a plurality of workers in sharing information about a work site, by communication with a plurality of clients assigned to the plurality of workers, respectively.

### Background Art

A terminal device for a remote monitoring assistance system has been proposed for a worker who is patrolling and inspecting in a plant and a person who waits outside a work site to share information with sufficient accuracy (see Patent Literature 1, for example). This terminal device comprises a video input unit which inputs video data of the site, an input operation selecting unit such as a pen or a mouse, a detection unit which detects whether there is new video to be obtained, a communication control unit which wirelessly transmits and receives data to and from outside, and an input/output screen display unit which displays an input screen to input predetermined data.

### Citation List

### Patent Literature

Patent Literature 1: Japanese Patent Laid-Open No. 2005-242830

### Summary of Invention

### Technical Problem

However, it is preferable that a plurality of people involved in work can share information about an object requiring attention in a work area of the plurality of people involved in the work.

To solve the problem, an object of the present invention is to provide a server and system which allow a plurality of people involved in work to share information about an object requiring attention in a work area.

### Solution to Problem

The present invention relates to a work assist server to assist a plurality of workers in sharing information about a work site, by communication with a plurality of clients assigned to the plurality of workers, respectively.

The work assist server of the present invention comprises a first assist processing element which recognizes existence of a target object in a target object image region that is a part of a captured image obtained through an imaging device and target object related information about the target object, and a real space position and real space posture of the imaging device, based on communication with a first client among the plurality of clients, and which presumes an extension mode of the target object in a real space, based on the real space position and real space posture of the imaging device, and a second assist processing element which causes an output interface of a second client among the plurality of clients to output a work environment image indicating the extension mode of the target object presumed by the first assist processing element and the target object related information, based on communication with the second client.

A work assist system of the present invention includes the work assist server of the present invention, and the plurality of clients.

According to the work assist server and the work assist system (hereinafter referred to as "the work assist server and the like" as appropriate) of the present invention, the work environment image indicating the extension mode of the target object in the real space in the target object image region that is a part of the captured image obtained through the imaging device of the first client and the target object related information is outputted to the output interface of the second client.

Consequently, for example, when each worker recognizes the existence of the target object around the worker, the worker can immediately obtain the captured image of the target object by use of the client as the first client. Then, another worker can immediately recognize the extension mode of the target object in the real space and the target object related information through the work environment image outputted to the output interface by use of the client as the second client. Furthermore, for example, by each of the plurality of workers in a common site using the client as the first client, it is possible to share a map with an abundant amount of information about various target objects among the plurality of workers. Consequently, for example, when the worker works using a work machine, the worker can smoothly perform the work while being aware of the extension mode of the target object.

### Brief Description of Drawings

FIG. 1 is an explanatory view concerning a configuration of a work assist system as an embodiment of the present invention.
FIG. 2 is an explanatory view concerning a configuration of a remote operation device.
FIG. 3 is an explanatory view concerning a configuration of a work machine.
FIG. 4 is an explanatory view concerning a first function of the work assist system.
FIG. 5 is an explanatory view concerning a second function of the work assist system.
FIG. 6 is an explanatory view concerning a captured image and a target object image region.
FIG. 7 is an explanatory view concerning a first environment image.
FIG. 8 is an explanatory view concerning a work environment image.
FIG. 9 is an explanatory view concerning a second environment image.

### Description of Embodiments

### (Configuration of Work Assist System)

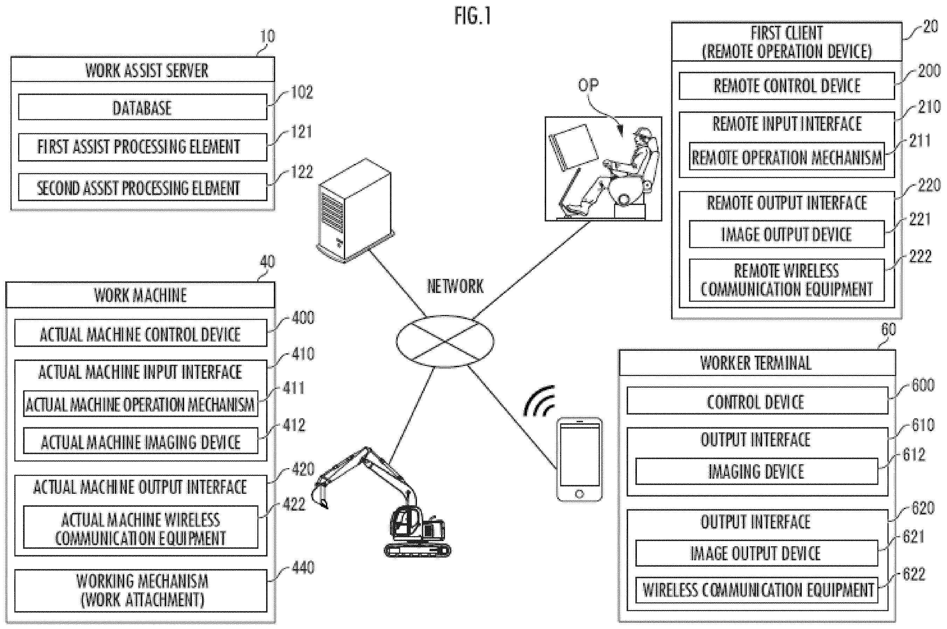

A work assist system as an embodiment of the present invention shown in FIG. 1 includes a work assist server 10, a remote operation device 20 to remotely operate a work machine 40, and a worker terminal 60. "A plurality of clients" may include one or more remote operation devices 20 and one or more worker terminals 60 or may include a plurality of remote operation devices 20 or a plurality of worker terminals 60. The work assist server 10, the remote operation device 20, the work machine 40 and the worker terminal 60 are configured to be mutually network communicable.

### (Configuration of Work Assist Server)

The work assist server 10 comprises a database 102, a first assist processing element 121, and a second assist processing element 122. The database 102 stores and holds "a captured image", "a real space position and real space posture of an imaging device 612", "an extension mode of a target object image region in the captured image", "target object related information about a target object existing in the target object image region" and the like. The database 102 may include a database server separate from the work assist server 10. Each assist processing element includes an arithmetic processing unit (a single core processor or a multi-core processor or a processor core included in the multi-core processor) and reads required data and software from a storage device such as a memory and executes after-mentioned arithmetic processing for the data as a target in accordance with the software.

### (Configuration of Remote Operation Device)

The remote operation device 20 constituting one client comprises a remote control device 200, a remote input interface 210, and a remote output interface 220. The remote control device 200 includes an arithmetic processing unit (a single core processor or a multi-core processor or a processor core included in the multi-core processor) and reads required data and software from a storage device such as a memory and executes arithmetic processing for the data as a target in accordance with the software. The remote input interface 210 comprises a remote operation mechanism 211. The remote output interface 220 comprises an image output device 221 and remote wireless communication equipment 222.

The one client may include a mobile terminal cooperating with the remote operation device 20 or having a mutual communication function. The mobile terminal includes a configuration similar to the after-mentioned worker terminal 60.

The remote operation mechanism 211 includes an operation device for traveling, an operation device for turning, an operation device for boom, an operation device for arm, and an operation device for bucket. Each operation device includes operation levers receiving a rotating operation. The operation levers (travel levers) for the operation device for traveling are operated to move a lower traveling body 410 of the work machine 40. The travel levers may also serve as travel pedals. For example, the travel pedals fixed to a base portion or a bottom end of the travel levers may be provided. The operation lever (turn lever) of the operation device for turning is operated to move a hydraulic swing motor included in a turning mechanism 430 of the work machine 40. The operation lever (boom lever) of the operation device for boom is operated to move a boom cylinder 442 of the work machine 40. The operation lever (arm lever) of the operation device for arm is operated to move an arm cylinder 444 of the work machine 40. The operation lever (bucket lever) of the operation device for bucket is operated to move a bucket cylinder 446 of the work machine 40.

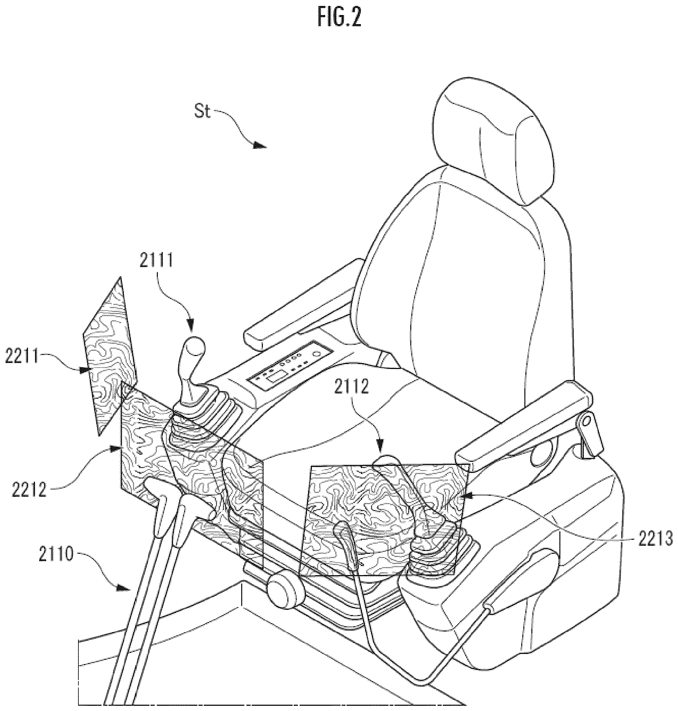

The respective operation levers included in the remote operation mechanism 211 are arranged around a seat St on which an operator sits as shown in FIG. 2, for example. The seat St has such a form as in a high back chair with armrests and may have any form on which a remote operator OP2 can sit, such as a form of a low back chair without a headrest or a form of a chair without a backrest.

In front of the seat St, a pair of left and right travel levers 2110 corresponding to left and right crawlers are arranged laterally in a left-right direction. One operation lever may serve as a plurality of operation levers. For example, a right-side operation lever 2111 provided in front of a right frame of the seat St shown in FIG. 2 may function as the boom lever when being operated in a front-rear direction and function as the bucket lever when being operated in a left-right direction. Similarly, a left-side operation lever 2112 provided in front of a left frame of the seat St shown in FIG. 2 may function as the arm lever when being operated in the front-rear direction and function as the turn lever when being operated in the left-right direction. A lever pattern may be arbitrarily changed depending on an operator's operation instruction.

For example, as shown in FIG. 2, the image output device 221 includes a diagonally right forward image output device 2211, a front image output device 2212 and a diagonally left forward image output device 2213 arranged diagonally forward to the right of the seat St, in front of the seat, and diagonally forward to the left of the seat, respectively. The image output devices 2211 to 2213 may further comprise a speaker (voice output device).

### (Configuration of Work Machine)

The work machine 40 comprises an actual machine control device 400, an actual machine input interface 410, an actual machine output interface 420, and a working mechanism 440. The actual machine control device 400 includes an arithmetic processing unit (a single core processor or a multi-core processor or a processor core included in the multi-core processor) and reads required data and software from a storage device such as a memory and executes arithmetic processing for the data as a target in accordance with the software.

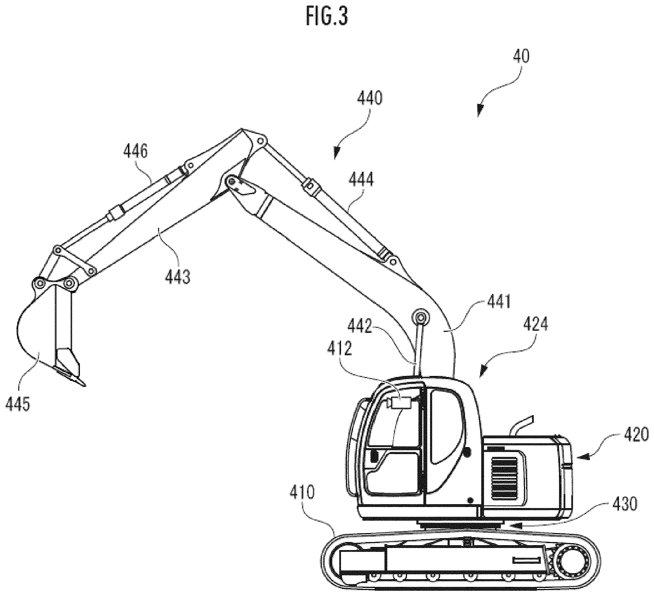

The work machine 40 is, for example, a crawler shovel (construction machine), and comprises the crawler lower traveling body 410, and an upper turning body 420 rotatably mounted on the lower traveling body 410 via the turning mechanism 430 as shown in FIG. 3. In a front left part of the upper turning body 420, a cab (driver's cab) 424 is provided. In a front center part of the upper turning body 420, a work attachment 440 is provided.

The actual machine input interface 410 comprises an actual machine operation mechanism 411 and an actual machine imaging device 412. The actual machine operation mechanism 411 comprises a plurality of operation levers arranged around a seat disposed inside the cab 424 in the same manner as in the remote operation mechanism 211. A drive mechanism or a robot which receives a signal depending on an operation mode of a remote operation lever and moves an actual machine operation lever based on the received signal is provided in the cab 424. The actual machine imaging device 412 is installed, for example, inside the cab 424, and images an environment including at least a part of the working mechanism 440 through a front window of the cab 424.

The actual machine output interface 420 comprises actual machine wireless communication equipment 422.

The work attachment 440 as the working mechanism comprises a boom 441 mounted on the upper turning body 420 such that the boom can be undulated, an arm 443 rotatably coupled to a tip end of the boom 441, and a bucket 445 rotatably coupled to a tip end of the arm 443. The boom cylinder 442, the arm cylinder 444 and the bucket cylinder 446, each of which is configured with a telescopic hydraulic cylinder, are attached to the work attachment 440.

The boom cylinder 442 is interposed between the boom 441 and the upper turning body 420 to receive supply of hydraulic oil and extend and retract, thereby rotating the boom 441 in an undulating direction. The arm cylinder 444 is interposed between the arm 443 and the boom 441 to receive the supply of hydraulic oil and extend and retract, thereby rotating the arm 443 to the boom 441 about a horizontal axis. The bucket cylinder 446 is interposed between the bucket 445 and the arm 443 to receive the supply of hydraulic oil and extend and retract, thereby rotating the bucket 445 to the arm 443 about the horizontal axis.

### (Configuration of Worker Terminal)

The worker terminal 60 constituting the other client is a terminal device such as a smartphone or a tablet terminal, and comprises a control device 600, an input interface 610, and an output interface 620. The control device 600 includes an arithmetic processing unit (a single core processor or a multi-core processor or a processor core included in the multi-core processor) and reads required data and software from a storage device such as a memory and executes arithmetic processing for the data as a target in accordance with the software.

The input interface 610 comprises the imaging device 612. The input interface 610 includes a button, a switch or the like of a touch panel. The output interface 620 comprises an image output device 621 (and a voice output device as required), and wireless communication equipment 622.

### (Function)

### (First Function (Output of Work Environment Image))

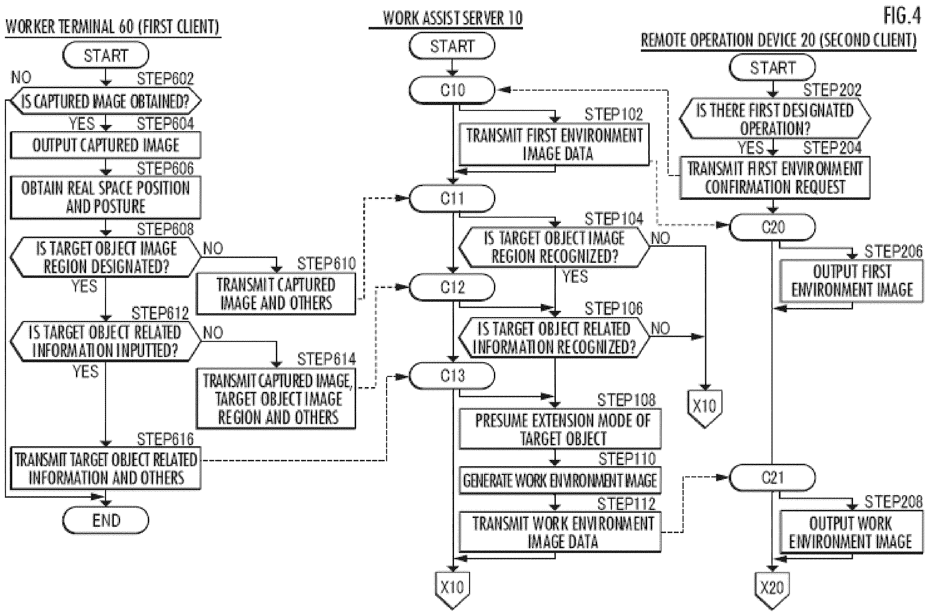

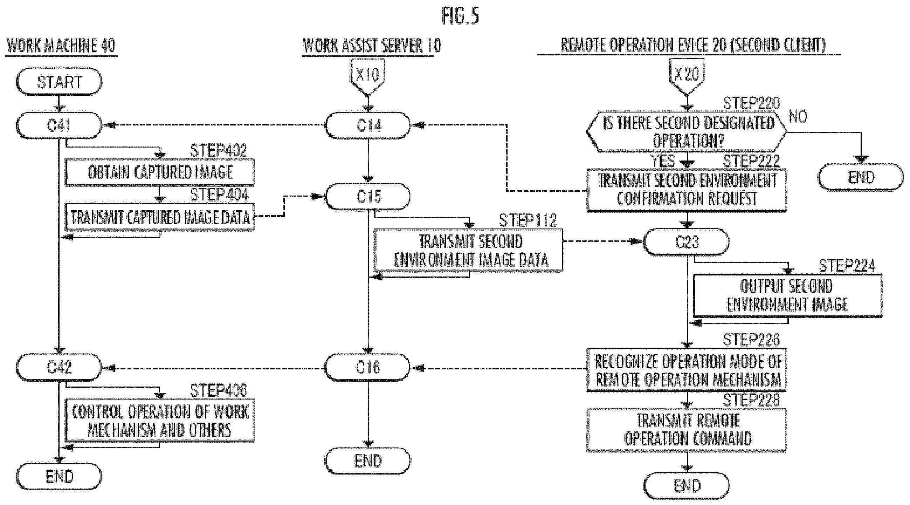

Description will be made as to a function of the work assist system with the above configuration with reference to flowcharts shown in FIG. 4 and 5. In the flowcharts, a block denoted with a reference sign starting with "C" is used for simplicity of description, means data transmission and/or reception and means conditional branch in which processing in a branch direction is executed on conditions of the data transmission and/or reception. FIG. 4 shows a flowchart in a case where the worker terminal 60 corresponds to "a first client", and the remote operation device 20 corresponds to "a second client", and conversely, the worker terminal 60 may correspond to "the second client", and the remote operation device 20 may correspond to "the first client".

When each constituent element (arithmetic processing resource or hardware resource) of the present invention "recognizes" information, the recognizing is concept including processing to prepare information in any form available for subsequent processing, such as receiving of the information, reading or retrieving of the information from the storage device or the like, writing (storing and holding) or registering of the information in the storage device or the like, presuming, determining, identifying, measuring, predicting or the like of the information by executing arithmetic processing of an output signal from the sensor and/or received or retrieved basic information according to predetermined algorithm, and the like.

In the remote operation device 20, it is determined whether there is a first designated operation through the remote input interface 210 by an operator OP (FIG. 4/STEP202). The first designated operation is, for example, an operation of tapping a predetermined location in the remote input interface 210. In a case where the determination result is positive (YES in FIG. 4/STEP202), a first environment confirmation request is transmitted to the work assist server 10 through the remote wireless communication equipment 222 (FIG. 4/STEP204).

In the work assist server 10, in a case where the first environment confirmation request is received (FIG. 4/C10), the first assist processing element 121 transmits first environment image data representing global appearance of a work site to the remote operation device 20 (FIG. 4/STEP102).

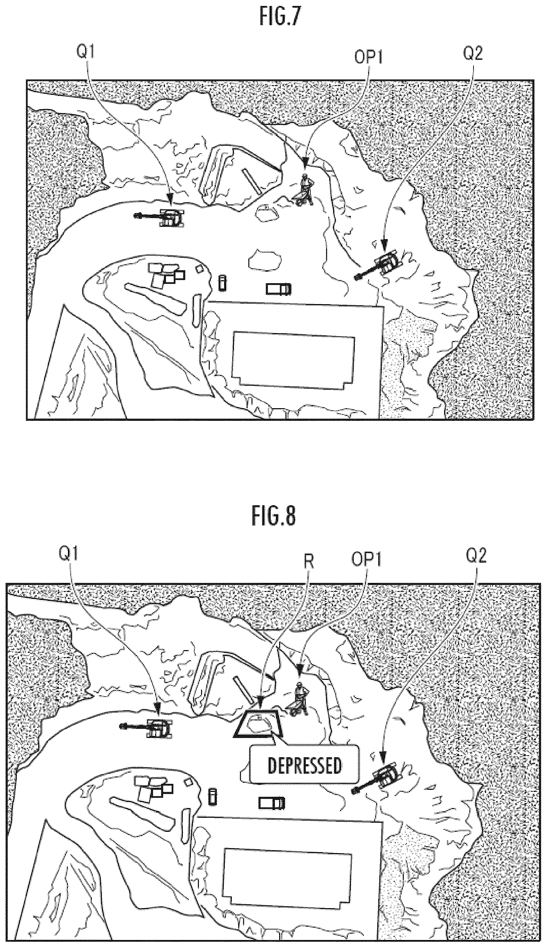

In the remote operation device 20, in a case where the first environment image data is received through the remote wireless communication equipment 222 (FIG. 4/C20), a first environment image depending on the first environment image data is outputted to the image output device 221 (FIG. 4/STEP206). Consequently, for example, as shown in FIG. 7, the image output device 221 included in the remote output interface 220 outputs a bird's eye map or a bird's eye captured image showing the global appearance of the work site. A position in the bird's eye map may be specified by latitude and longitude. The bird's eye captured image includes an image or icon Q1 indicating a location of the first work machine 40 and an image or icon Q2 indicating a location of the second work machine 40, as well as an image OP1 indicating a location of a first worker. The bird's eye captured image may be obtained, for example, through an imaging device mounted in an unmanned aerial vehicle or an imaging device placed on a structure such as a pole of the work site. Each of an imaging location and an angle of view of the captured image as the first environment image may be arbitrarily changed. The bird's eye map may be generated based on the bird's eye captured image.

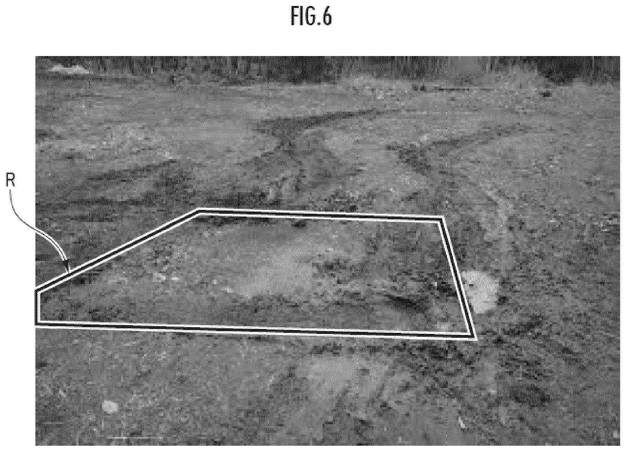

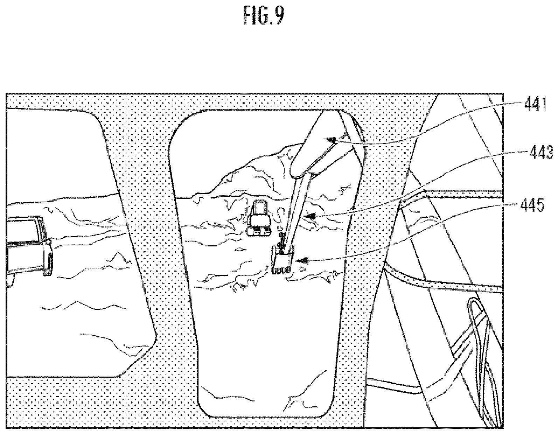

In the worker terminal 60, the captured image is obtained through the imaging device 612 in response to an imaging operation through the input interface 610 by the first worker (FIG. 4/STEP602). Also, the captured image is outputted to the image output device 621 included in the output interface 620 (FIG. 4/STEP604). Consequently, for example, as shown in FIG. 6, the captured image showing the appearance of the work site where a trace passed by the work machine 40 is a depression is outputted to the image output device 621. In a case where the remote operation device 20 corresponds to "the first client", the image output device 221 included in the remote output interface 220 outputs a captured image (a second environment image) showing appearance around the work machine 40, the image being obtained through the actual machine imaging device 412 mounted in the work machine 40 (see FIG. 9).

The control device 600 measures a real space position and real space posture of the imaging device 612 when the captured image is obtained (FIG. 4/STEP606). The real space position (latitude and longitude) of the imaging device 612 is measured based on an output signal of a positioning sensor such as a GPS. The real space posture of the imaging device 612 is measured based on an output signal of a 3-axis directional sensor or an acceleration sensor.

The control device 600 determines whether a target object image region R is designated through an operation in the input interface 610 (FIG. 4/STEP608). For example, in the worker terminal 60, in a touch panel that forms both of the input interface 610 and the output interface 620, an extension mode or contour of the target object image region may be recognized by recognizing a fingertip or pen trajectory of the first worker. Consequently, for example, as shown in FIG. 6, the first worker may designate the target object image region R having a substantially trapezoidal shape in the captured image. In a case where the remote operation device 20 corresponds to "the first client", designation of the target object image region R and input of target object related information are possible through an operation in the input interface 610, in the second environment image (see FIG. 9) as the captured image obtained through the actual machine imaging device 412 mounted in the work machine 40, the captured image being outputted by the output interface 620 (see FIG. 4/STEP608).

In a case where the determination result is positive (YES in FIG. 4/STEP608), the control device 600 determines whether the target object related information is inputted through the operation of the first worker in the input interface 610 (FIG. 4/STEP612). For example, the target object related information may be recognized by recognizing the fingertip or a pen contact mode of the first worker in a touching keyboard that forms both of the input interface 610 and output interface 620. Consequently, information indicating a type or property of the target object, such as "gravel", "rubble", "material", "sandy", "hole", "depression", "puddle" or "rock", may be recognized as the target object related information.

In a case where the determination result is positive (YES in FIG. 4/STEP612), the wireless communication equipment 622 included in the output interface 620 transmits, to the work assist server 10, data representing each of "the captured image", "the real space position and real space posture of the imaging device 612", "the extension mode of the target object image region R in the captured image" and "the target object related information about the target object existing in the target object image region" (FIG. 4/STEP616). In a case where the remote operation device 20 corresponds to "the first client", the remote wireless communication equipment 222 included in the remote output interface 220 transmits, to the work assist server 10, the data representing each of "the captured image", "the real space position and real space posture of the actual machine imaging device 412", "the extension mode of the target object image region R in the captured image" and "the target object related information about the target object existing in the target object image region".

In the work assist server 10, in a case where the data representing each of "the captured image data", "the real space position and real space posture of the imaging device 612", "the extension mode of the target object image region R" and "the target object related information" is received (FIG. 4/C13), the first assist processing element 121 presumes the extension mode of the target object in the real space (FIG. 4/STEP108). For example, a height of the imaging device 612 from ground as a reference with which the worker is in contact is assumed to be a predetermined height in a range from a standard waist position to a head position of a person standing or sitting on the ground. Also, it is assumed that the target object exists in a horizontal plane (two-dimensional space) as high as the ground. Specifically, it is assumed that the target object two-dimensionally extends in an area where the target object image region R designated in the captured image is projected onto the horizontal plane with spread depending on the angle of view of the imaging device 612.

On these assumptions, the extension mode (spread in each of a latitude direction and a longitude direction) of the target object is presumed based on the real space position and real space posture of the imaging device 612, as well as the angle of view or a focal length, in addition to the extension mode of the target object image region R in a captured image coordinate system. In a case where the target object is a structure at a position higher than the ground or a depression depressed in the ground, presumption accuracy based on the assumptions becomes lower, but the extension mode of the target object in the real space can be roughly grasped.

The captured image (or a distance image as the captured image), to which a distance to the target object measured with a distance measurement sensor (or the distance measurement sensor as the imaging device 612) mounted in the worker terminal 60 is assigned as a pixel value, may be transmitted from the worker terminal 60 to the work assist server 10. In this case, the target object based on the real space position of the imaging device 612 or an extension mode of the surface of the object in the real space may be more accurately presumed.

Subsequently, the second assist processing element 122 generates a work environment image indicating a presumption result of the extension mode of the target object in the real space by the first assist processing element 121 and the target object related information, based on the first environment image (FIG. 4/STEP110). Then, the second assist processing element 122 transmits work environment image data to the remote operation device 20 (FIG. 4/STEP112).

In the remote operation device 20, in a case where the remote wireless communication equipment 222 included in the remote output interface 220 receives the work environment image data (FIG. 4/C21), the image output device 221 included in the remote output interface 220 outputs the work environment image (FIG. 4/STEP208). Consequently, for example, as shown in FIG. 8, an image output device 221 included in the remote output interface 220 outputs an image representing the extension mode of the target object in the real space and the target object related information indicating "depressed" in relation to the target object in the first work environment image (see FIG. 7).

In the worker terminal 60, in a case where the control device 600 determines that the target object related information is not inputted through the operation of the first worker in the input interface 610 (NO in FIG. 4/STEP612), the wireless communication equipment 622 included in the output interface 620 transmits, to the work assist server 10, data representing each of "the captured image", "the real space position and real space posture of the imaging device 612" and "the extension mode of the target object image region R in the captured image" (FIG. 4/STEP614).

In the work assist server 10, in a case where data representing each of "the captured image data", "the real space position and real space posture of the imaging device 612" and "the extension mode of the target object image region R" is received (FIG. 4/C12), the first assist processing element 121 determines whether the target object related information can be recognized (FIG. 4/STEP106). For example, a type or property of an object existing in the target object image region R may be recognized as the target object related information by texture analysis processing of the target object image region R. In a case where the determination result is positive (YES in FIG. 4/STEP106), processing of and after the presumption of the extension mode of the target object in the real space (FIG. 4/STEP108) is executed. In a case where the determination result is negative (NO in FIG. 4/STEP106), a series of processing shown in FIG. 4 ends without transmitting the work environment image data to the remote operation device 20, eventually without outputting the work environment image (see FIG. 8) in the remote operation device 20.

In the worker terminal 60, in a case where the control device 600 determines that the target object image region R is not designated through the operation of the first worker in the input interface 610 (NO in FIG. 4/STEP608), the wireless communication equipment 622 included in the output interface 620 transmits, to the work assist server 10, data representing each of "the captured image" and "the real space position and real space posture of the imaging device 612" (FIG. 4/STEP610).

In the work assist server 10, in a case where the data representing each of "the captured image data" and "the real space position and real space posture of the imaging device 612" is received (FIG. 4/C11), the first assist processing element 121 determines whether the target object image region can be recognized (FIG. 4/STEP104). For example, a part of the captured image may be recognized as the target object image region by image analysis processing such as pattern matching for the captured image as a target. In a case where the determination result is positive (YES in FIG. 4/STEP104), processing of or after the determination as to whether the target object related information can be recognized (FIG. 4/STEP106) is executed. In a case where the determination result is negative (NO in FIG. 4/STEP104), the series of processing shown in FIG. 4 ends without transmitting the work environment image data to the remote operation device 20, eventually without outputting the work environment image (see FIG. 8) in the remote operation device 20.

### (Second Function (Remote Operation of Work Machine))

In the remote operation device 20, it is determined whether there is a second designated operation through the remote input interface 210 by the operator OP (FIG. 5/STEP220). "The second designated operation" is, for example, an operation of tapping the image Q1 or Q2 in the remote input interface 210 to designate the work machine 40 intended to be remotely operated by the worker in the work environment image (see FIG. 7). The second designated operation may be an operation in a mode different from the first designated operation or may be an operation in the same mode. In a case where the determination result is negative (NO in FIG. 5/STEP220), a series of processing ends. On the other hand, in a case where the determination result is positive (YES in FIG. 5/STEP220), a second environment confirmation request is transmitted to the work assist server 10 through the remote wireless communication equipment 222 (FIG. 5/STEP222).

In the work assist server 10, in a case where the second environment confirmation request is received, the first assist processing element 121 transmits the second environment confirmation request to the corresponding work machine 40 (FIG. 5/C14).

In the work machine 40, in a case where the environment confirmation request is received through the actual machine wireless communication equipment 422 (FIG. 5/C41), the actual machine control device 400 obtains the captured image through the actual machine imaging device 412 (FIG. 5/STEP402). The actual machine control device 400 transmits the captured image data representing the captured image to the work assist server 10 through the actual machine wireless communication equipment 422 (FIG. 5/STEP404).

In the work assist server 10, in a case where the captured image data is received (FIG. 5/C15), second environment image data (data representing all or part of the captured image itself or a simulated environment image generated based on this all or part of the captured image) depending on the captured image data is transmitted to the remote operation device 20 (FIG. 5/STEP112).

In the remote operation device 20, in a case where the second environment image data is received through the remote wireless communication equipment 222 (FIG. 5/C23), the second environment image depending on the second environment image data is outputted to the image output device 221 (FIG. 5/STEP224). Consequently, for example, as shown in FIG. 9, the environment image including the boom 441, the arm 443, the bucket 445 and the arm cylinder 444 that are some parts of the work attachment 440 of the working mechanism is displayed in the image output device 221.

In the remote operation device 20, the remote control device 200 recognizes an operation mode of the remote operation mechanism 211 (FIG. 5/STEP226), and a remote operation command depending on the operation mode is transmitted to the work assist server 10 through the remote wireless communication equipment 222 (FIG. 5/STEP228).

In the work assist server 10, in a case where the remote operation command is received, the first assist processing element 121 transmits the remote operation command to the work machine 40 (FIG. 5/C16).

In the work machine 40, in a case where the actual machine control device 400 receives the operation command through the actual machine wireless communication equipment 422 (FIG. 5/C42), an operation of the work attachment 440 or the like is controlled (FIG. 5/STEP406). For example, an operation of scooping soil before the work machine 40 with the bucket 445 and rotating the upper turning body 420 to drop the soil from the bucket 445 is executed.

### (Effects)

According to the work assist system with the above configuration and the work assist server 10 included in this system, the work environment image indicating the extension mode of the target object in the real space in the target object image region R that is a part of the captured image obtained through the imaging device (e.g., the imaging device 612) of the first client (e.g., the worker terminal 60) and the target object related information is outputted to the output interface (e.g., the remote output interface 220) of the second client (e.g., the remote operation device 20) (see FIG. 4/STEP AFTER YES in STEP602 to STEP610, STEP614, STEP616 to STEP112, and then STEP208, and FIG. 8).

Consequently, for example, when each worker recognizes the existence of the target object around the worker, the worker can immediately obtain the captured image of the target object by use of the client as the first client (see FIG. 4/STEP602 and FIG. 6). Then, another worker can immediately recognize the extension mode of the target object in the real space and the target object related information through the work environment image outputted to the output interface of the client by use of the client as the second client (see FIG. 4/STEP208 and FIG. 8). Furthermore, for example, each of the plurality of workers in a common site uses the client as the first client, and the plurality of workers can share a map with an abundant amount of information about various target objects. Consequently, for example, when the worker works using the work machine, the worker can smoothly perform the work while being aware of the extension mode of the target object.

### (Other Embodiments of Present Invention)

In the above embodiment, the work assist server 10 is configured with one or more servers separate from each of the remote operation device 20, the work machine 40 and the worker terminal 60 (see FIG. 1), and as another embodiment, the work assist server 10 may be a constituent element of the remote operation device 20, the work machine 40 or the worker terminal 60. Each of the respective constituent elements 110, 121 and 122 of the work assist server 10 may be a constituent element of each of two or more of the remote operation device 20, the work machine 40 and the worker terminal 60 which are mutually communicable.

In the above embodiment, in the first client (e.g., the worker terminal 60 or the remote operation device 20), the designation of the target object image region R and the input of the target object related information are possible. As another embodiment, however, it may be postulated that the designation of the target object image region R and the input of the target object related information are not performed in the first client, and the captured image obtained through the imaging device may be transmitted to the work assist server 10 together with the data representing the real space position and real space posture of the imaging device (see FIG. 4/STEP610).

Alternatively, it may be postulated that the target object related information is not inputted in the first client, and the captured image obtained through the imaging device may be transmitted to the work assist server 10 together with the target object image region R and the data representing the real space position and real space posture of the imaging device (see FIG. 4/STEP614). Furthermore, it may be postulated that the target object image region R is not designated in the first client, and the captured image obtained through the imaging device may be transmitted to the work assist server 10 together with the target object related information and the data representing the real space position and real space posture of the imaging device.

The first assist processing element 121 recognizes the extension mode of the target object in the target object image region designated through the input interface (210, 610) of the first client and the target object related information about the target object, in the captured image outputted to the output interface (220, 620) of the first client, based on the communication with the first client (e.g., the worker terminal 60 or the remote operation device 20).

Consequently, for example, when each worker recognizes the existence of the target object around the worker as described above, the worker can immediately obtain the captured image of the target object by use of the client as the first client. Furthermore, each worker can designate the image region where the target object exists, the image region being a part of the captured image of the target object outputted to the output interface of the first client, as the target object image region through the input interface and can input the target object related information. Consequently, the existence of the target object noticed by each worker and the target object related information can be more accurately conveyed to the other worker.

The first assist processing element 121 recognizes the existence of the target object in the target object image region that is a part of the captured image obtained through the actual machine imaging device 412 mounted in the work machine 40 and the target object related information about the target object, and the real space position and real space posture of the actual machine imaging device 412, based on the communication with the remote operation device 20 as the first client, for remotely operating the work machine 40.

Consequently, the plurality of workers can share the extension mode of the target object around the work machine 40 and the target object related information based on the captured image obtained through the actual machine imaging device 412 mounted in the work machine 40.

### Reference Signs List

- 10: work assist server
- 20: remote operation device
- 40: work machine
- 60: worker terminal
- 102: database
- 121: first assist processing element
- 122: second assist processing element
- 210: remote input interface
- 220: remote output interface
- 410: actual machine input interface
- 412: actual machine imaging device
- 420: actual machine output interface
- 440: work attachment (working mechanism)
- 610: input interface
- 612: imaging device
- 620: output interface

## Claims

1. A work assist server to assist a plurality of workers in sharing information about a work site, by communication with a plurality of clients assigned to the plurality of workers, respectively, the work assist server comprising:
a first assist processing element which recognizes existence of a target object in a target object image region that is a part of a captured image obtained through an imaging device and target object related information about the target object, and a real space position and real space posture of the imaging device, based on communication with a first client among the plurality of clients, and which presumes an extension mode of the target object in a real space, based on the real space position and real space posture of the imaging device; and
a second assist processing element which causes an output interface of a second client among the plurality of clients to output a work environment image indicating the extension mode of the target object presumed by the first assist processing element and the target object related information, based on communication with the second client.

2. The work assist server according to claim 1, wherein the first assist processing element recognizes the extension mode of the target object in the target object image region designated through an input interface of the first client and the target object related information about the target object, in a captured image outputted to an output interface of the first client, based on the communication with the first client.

3. The work assist server according to claim 1 or 2, wherein the first assist processing element recognizes the existence of the target object in the target object image region that is a part of the captured image obtained through an imaging device mounted in a work machine and the target object related information about the target object, and the real space position and real space posture of the imaging device, based on communication with a remote operation device as the first client, for remotely operating the work machine.

4. A work assist system comprising:
the work assist server according to any one of claims 1 to 3, and
the plurality of clients.

5. A work assist method of assisting a plurality of workers in sharing information about a work site, by communication with a plurality of clients assigned to the plurality of workers, respectively, the work assist method comprising:
a first assist process of recognizing existence of a target object in a target object image region that is a part of a captured image obtained through an imaging device and target object related information about the target object, and a real space position and real space posture of the imaging device, based on communication with a first client among the plurality of clients, and presuming an extension mode of the target object in a real space, based on the real space position and real space posture of the imaging device; and
a second assist process of causing an output interface of a second client among the plurality of clients to output a work environment image indicating the extension mode of the target object presumed in the first assist process and the target object related information, based on communication with the second client.
